# EUROPEAN PATENT SPECIFICATION

(11) **EP 0 657 098 B1**
(45) Date of publication and mention of the grant of the patent: **04.04.2001**
(21) Application number: 94203590.8
(22) Date of filing: 09.12.1994
(51) Int. Cl.: A01K 11/00, A01K 29/00, A01J 5/00

(54) **Information system and method for automatically obtaining data about animals in dairy farming**
Informationssystem und Verfahren zum Erhalten von Daten bezüglich Milchvieh
Système d'information et procédé pour obtenir automatiquement des données sur des animaux laitiers

(30) Priority: 10.12.1993 NL 9302154
(43) Date of publication of application: 14.06.1995
(73) Proprietor: N.V. Nederlandsche Apparatenfabriek NEDAP, NL-7141 DE Groenlo (NL)
(72) Inventor: Loosveld, Serge Louis, NL-7141 WB Groenlo (NL)
(74) Representative: Smulders, Theodorus A.H.J., Ir.

(56) References cited:
- EP-A- 0 442 383
- EP-A- 0 551 957
- DE-A- 3 609 275
- DE-B- 2 828 548
- US-A- 4 463 353
- US-A- 5 152 246

## Description

This invention relates to an information system for automatically obtaining data about animals in dairy farming, which comprises a processing device with an input gate to which signals can be fed which comprise information about a milk flow during the milking of an animal or a group of animals, and in which the processing device is adapted to derive data from said signals, store said data and further process said data, the processing device is further adapted to determine deviations in the data in relation to predetermined milk flow characteristics of the relevant animal or the relevant group of animals and/or to update predetermined flow characteristics based on more recently derived data and to determine changes in said milk flow characteristics, and to signal an animal or group of animals in which the deviations and/or changes exceed predetermined values, for the purpose of watching the reproductive status and/or health status of the relevant animal or the relevant group of animals.

Such a system is disclosed in U.S. patent 5,152,246. During automatic milking, this system measures the milk flow from the udder of a cow with a view to automatically stopping the milking timely.

In accordance with the invention the processing device is also adapted to determine from said signals an expected value of said data and a maximum permissible deviation from said expected value by means of statistical technics for obtaining said predetermined milk flow characteristics. In accordance with the invention, therefore, data regarding the milk flow are used to give indications with regard to the fertility status and the health of the milk-yielding animal. By statistically processing these measured values, changes in the milk flow characteristics or deviations from those characteristics can be traced by the information system and be made known. The purpose of the information system is to support the dairy farmer in managing his stock.

The milk flow characteristics mentioned comprise an expected value and a maximum permissible deviation. Thus, for instance, the difference between the received data and the expected value can be determined. If the difference is greater than the maximum permissible deviation, the animal or the group of animals is signalled by the system. A farmer can then investigate, for instance, whether the animal is ill or establish that the animal is fertile.

More particularly, the processing device processes the above-mentioned signals into statistical information for obtaining the milk flow characteristics mentioned. Thus a so-called self-learning system is obtained. The processing system can for instance determine an expected value of the data in question for the purpose of obtaining the milk flow characteristics.

More particularly, the processing device comprises, or is coupled to, a signalling device which is capable of signalling deviations between the milk flow characteristics on the one hand and the received data on the other which are greater than predetermined permissible deviations and/or is capable of signalling changes in the milk flow characteristics which are greater than predetermined permissible changes. A change in the milk flow characteristics can for instance be established by continuously adjusting the expected value on the basis of new data. If this expected value is subject to a sudden substantial change, something unusual appears to be going on.

The signalling device can for instance generate an output signal when a deviation is greater than the permissible deviation and/or a change is greater than the permissible change. This signal can be an observable signal to alert a farmer, for instance. However, the signal can also be a control signal by which a particular device is activated, for instance an automatic gate which is opened to guide the animal in question to a different space.

According a possible embodiment of the system, the data relate to the time interval between the application of a milk cluster of, for instance, a milking robot, and the beginning of the milk flow from the udder of an animal which is being milked by the milking robot.

It is further possible for the data to relate or additionally relate to the time interval between the beginning of the milk flow and the end of the milk flow during the milking of the animal. Similarly, it is possible for the data to relate or additionally relate to the maximum flow rate in a subinterval of the milk flow period. The milk flow period can for instance be defined as the time interval between the beginning of the milk flow and the end of the milk flow during the milking of the animal. Here, milking can again be carried out with the aid of a milking robot, which is known per se.

In addition, the data may also relate to the amount of milk which has flowed on average during the milk flow period and/or the variation in the milk flow in time during the milk flow period. An example of the latter option would be the change in the flow rate per unit time.

According to a particular aspect of the invention, the processing device may further comprise one or more input gates to which other parameters regarding each individual animal or group of animals can be fed. In such cases, the processing device can process the signalled deviations and/or changes in combination with the other available parameters, such as feed intake, milk yield, temperature, animal activity, milk conductivity and water intake.

According to a preferred embodiment of the system, the system further comprises a milking robot for automatically milking the animals, the milking robot comprising means for generating the signals representing the milk flow during the milking of an animal or group of animals. These signals are then entirely automatically fed to the processing device and processed further. However, it is also possible for the signals to be inputted in a different manner or from a different source, for instance with the aid of a keyboard.

According to the invention, a method for automatically obtaining data about animals in dairy farming, in which signals comprising information about a milk flow during the milking of an animal or group of animals are fed to a processing device, and the processing device derives data from the signals, stores the data and processes the data further, wherein deviations in the data in relation to predetermined milk flow characteristics of the relevant animal or the relevant group of animals and/or to update predetermined flow characteristics based on more recently derived data and to determine changes in said milk flow characteristics are determined, and an animal or group of animals is signalled for the purpose of watching the reproductive status and/or health status of the relevant animal or the relevant group of animals when the deviations and/or changes exceed predetermined values, has as a characteristic feature that an expected value of said data and a possible maximum deviation is determined from said signals by means of statistical technics for obtaining said predetermined milk flow characteristics.

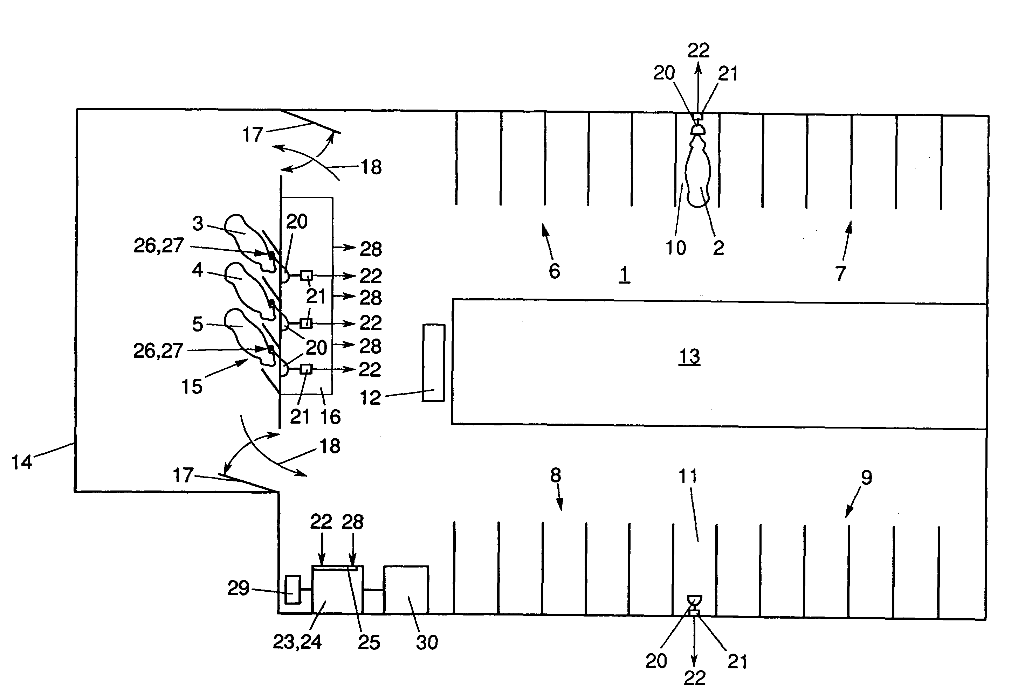

The invention will be further explained with reference to the single drawing. The single drawing shows a stable layout comprising a possible embodiment of a system according to the invention. The example shown concerns a stable 1 for milk cows. A few cows are schematically indicated at 2, 3, 4 and 5. The stable shown comprises a number of cubicles 6, 7, 8, 9; feeding stations 10, 11; a drinking station or drinking trough 12; and a feeding floor 13 where the roughage for the animals is deposited. The stable further comprises a milking parlor 14 with a number of milk stands 15, where the cows, such as the cows 3-5, can be milked with the aid of a milking robot 16. The milking parlor joins the rest of the quarters by way of passages 18, which in this example are equipped with gates 17.

In the example shown, the milking robot 16 is provided with antennas 20 which are connected with transceiver devices 21 arranged *in situ* or elsewhere. Further, the feeding stations 10, 11 are each provided with such an antenna 20 and a transceiver device 21.

If desired, antennas of transceiver devices can be arranged at more points, for instance at the drinking trough(s), in the cubicles, at the exit of the milking parlor, etc.

Each animal whose behaviour is to be investigated is provided with a suitable identification means, such as for instance an electronic responder, which generates a code signal associated with the relevant animal as soon as the responder comes within reach of an antenna of a transceiver device. The transceiver device can recognize the received code signal, so that it can be registered at what time, how long and which animal or group of animals is present at a specific place.

On the basis of these data, visiting frequencies (the number of visits to a specific station per unit time, for instance per day), displacement patterns, etc., can be determined for each animal, and, if desired, reproduced. For that purpose, the transceiver devices can be connected with a suitable processing device 23 by way of lines 22. In this example, the processing device 23 consists of a computer 24 with an input gate 25. Also variations in the displacement patterns, visiting frequencies, etc., can then be determined and optionally reproduced.

The milking robot 16 is of a type which is known per se and accordingly comprises a number of milk clusters 26 which can be connected to the udders of the animals for automatically milking the animal. Further, each milk cluster 26 comprises a sensor 27 for measuring the milk flow from an udder of an animal during milking. The sensors 27 generate signals which represent these milk flows. These generated signals are fed to the input gate 25 of the processing device 23 by way of lines 28. Thus information about the milk flow of an animal during milking and the identity of the relevant animal is fed to the processing device 23.

The operation of the system which in this example comprises at least the processing device 23, the antennas 20, transceivers 21, and the sensors 25, is as follows.

On the basis of the data inputted in the processing device 23, the latter can produce information which can be used by the farmer when making decisions about his stock or about individual animals of his stock. At dairy farms it is normally of importance to have animals calve regularly at intervals which are not unduly long, whereafter a new peak in the milk yield can be attained. In order not to unduly prolong the intervals between calving events, the animals must be served/inseminated timely and at the proper time (when the animal is in heat). In particular the detection of the proper time of heat is of importance, since an animal is often in heat for only a few hours (6 to 18 hours) and then no longer so for a succession of days. A second important aspect in dairy farming is animal health. The information system is an important supporting tool for the dairy farmer since it can draw the farmer's attention to animals exhibiting characteristics that deviate from what may be expected, such as for instance, eating less than expected, being less active than expected, being less productive than expected, etc.

A particular feature of the present information system is that for watching the fertility status and for watching animal health, use is made of the milk flow information. The processing unit 23 can derive *inter alia* the following information from the signals received from the sensors 25:
- false milking time: the time interval between the connection of the milk cluster 26 and the beginning of the milk flow from the udder;
- milk flow period: the time interval between the beginning of the milk flow and the end of the milk flow;
- flow rate: the amount of milk which has flowed on average during the milking period (amount of milk per unit time);
- maximum milk speed: the highest flow rate measured in a subinterval of the milking period, for instance the flow rate in the minute when the largest amount of milk has flowed from the udder;
- variation in the milk flow during the milking period. One animal will reach a high milk flow rapidly while another animal's milk flow may be slower to rise.

By means of statistical techniques, the processing unit 23 can determine an expected value of these data for each animal which is being milked, as well as a permissible deviation from this expected value. This expected value and this permissible maximum deviation in combination form a milk flow characteristic of the animal. In this example, the processing device is coupled with a signalling device 30, forming part of the information system, which is adapted to compare the expected value with the actual value of the measured data. If the difference is greater than the permissible deviation, the signalling device can detect animals exhibiting too large a deviation in the milk flow. The system can bring these detected animals to the farmer's attention, whereupon the farmer can undertake action. For this purpose, the signalling device can for instance generate a signal which can be observed by the farmer.

The second particular aspect of the present information system is that the milk flow characteristics are combined with other characteristics of the animal which are already being used in monitoring health and fertility, such as feed intake, animal activity, milk yield, milk temperature, and milk conductivity. The feed intake is for instance determined with the aid of the antennas 20 and the transceiver device 21 arranged at the feeding stations 11. Also data coming from external information suppliers can be included in this profile. This information can for instance be inputted with the aid of a keyboard 29 at the processing device 23. Through this combination it will be possible to give the reports of the system a higher reliability.

In this example, the processing device 23 processes the above-mentioned signals into statistical information for obtaining the milk flow characteristics. Thus a so-called self-learning system is obtained. The processing device 23 can for instance determine an expected value of the above-mentioned data for obtaining the milk flow characteristics. The distribution of the data can then be used for determining the maximum permissible deviation.

The signalling device is adapted to signal the deviation between the milk flow characteristics and the received data which is greater than a predetermined permissible deviation and/or to signal a change in the milk flow characteristics which is greater than a predetermined permissible change. The change in the milk flow characteristics can for instance be established by continuously adjusting the expected value on the basis of new data. If this expected value is subject to a sudden strong change, something unusual appears to be going on.

The signalling device can for instance generate the output signal when a deviation is greater than the permissible deviation and/or a change is greater than the permissible change. This signal can be an observable signal to alert the farmer, for instance. However, the signal can also be a control signal by which a particular device is activated, for instance an automatic gate which is opened to guide the animal in question to a different space.

In particular, via, for instance, the input gate 27 and/or the keyboard 29, other parameters regarding each individual animal or group of animals are fed to the processing device. The processing device can then process the signalled deviations and/or changes in combination with these other available parameters, such as feed intake, milk yield, temperature, animal activity, milk conductivity and water intake. It will be clear that the information fed to the processing device can originate from different sources and be inputted accordingly:
- manually, by the farmer/user;
- by coupling to data bases via modem, diskette or a different form of data carriers;
- by coupling to process control devices and transceiver installations, such as for instance feeding stations, weighing bridges, activity readers, milk conductivity meters, milk temperature meters, milk yield meters, milk flow meters, etc.

A further elaboration of the system is that the system not only reports signalled deviations but also controls peripheral equipment on the basis of the signalled deviations. Thus it is possible for the information system, when the pattern of data is indicative of a condition of heat, to automatically call by way of the modem the computer of the institution for artificial insemination.

These and similar variants are all understood to fall within the scope of the invention as disclosed in the appended claims.

## Claims

1. An information system for automatically obtaining data about animals in dairy farming, which comprises a processing device (23) with an input gate (25) to which signals can be fed which comprise information about a milk flow during the milking of an animal or group of animals, and in which the processing device (23) is adapted to derive data from said signals, store said data and further process said data, wherein the processing device (23) is further adapted to determine deviations in the data in relation to predetermined milk flow characteristics of the relevant animal or the relevant group of animals and/or to update predetermined flow characteristics based on more recently derived data and to determine changes in said milk flow characteristics, and to signal an animal or group of animals in which the deviations and/or changes exceed predetermined values, for the purpose of watching the reproductive status and/or health status of the relevant animal or the relevant group of animals, characterized in that, the processing device (23) is also adapted to determine from said signals an expected value of said data and a maximum permissible deviation from said expected value by means of statistical techniques for obtaining said predetermined milk flow characteristics.

2. An information system according to claim 1, characterized in that the processing device (23) comprises, or is coupled to, a signalling device (30) which is adapted to signal deviations between the milk flow characteristics on the one hand and the data derived from the received signals on the other which are greater than predetermined permissible deviations and/or is adapted to signal changes in said milk flow characteristics which are greater than predetermined permissible changes.

3. An information system according to claim 2, characterized in that the signalling device (30) generates an output signal when a deviation is greater than the permissible deviation and/or a change is greater than the permissible change.

4. An information system according to any one of the preceding claims, characterized in that the data derived from the signals relate to the time interval between the connection of a milk cluster (26) and the beginning of the milk flow from the udder of an animal.

5. An information system according to any one of the preceding claims, characterized in that the data derived from the signals relate to the time interval between the beginning of the milk flow and the end of the milk flow.

6. An information system according to any one of the preceding claims, characterized in that the data derived from the signals relate to the maximum flow rate in a subinterval of the milk flow period.

7. An information system according to any one of the preceding claims, characterized in that the data derived from the signals relate to the amount of milk which has flowed on average during the milk flow period.

8. An information system according to any one of the preceding claims, characterized in that the data derived from the signals relate to the variation in the milk flow in time during the milk flow period.

9. An information system according to any one of the preceding claims, characterized in that the processing device comprises one or more input gates (25) to which other parameters concerning each individual animal or group of animals can be fed.

10. An information system according to claim 9,
characterized in that the processing device processes said signalled deviations and/or changes in combination with other available parameters, such as feed intake, milk yield, temperature, animal activity, milk conductivity and water intake.

11. An information system according to any one of the preceding claims, characterized in that the system further comprises a milking robot for automatically milking the animals, the milking robot comprising means for generating said signals comprising information about the milk flow during the milking of an animal or group of animals.

12. A method for automatically obtaining data about animals in dairy farming, in which signals comprising information about a milk flow during the milking of an animal or group of animals are fed to a processing device, and the processing device derives data from the signals, stores the data and processes the data further, wherein deviations in the data in relation to predetermined milk flow characteristics of the relevant animal or the relevant group of animals and/or to update predetermined flow characteristics based on more recently derived data and to determine changes in said milk flow characteristics are determined, and an animal or group of animals is signalled for the purpose of watching the reproductive status and/or health status of the relevant animal or the relevant group of animals when the deviations and/or changes exceed predetermined values, characterized in that an expected value of said data and a possible maximum deviation is determined from said signals by means of statistical techniques for obtaining said predetermined milk flow characteristics.

13. A method according to any one of the preceding claim 12, characterized by signalling deviations between the milk flow characteristics and the received data which are greater than predetermined permissible deviations and/or changes in said milk flow characteristics which are greater than predetermined permissible changes.

14. A method according to any one of the preceding claims 12 or 13, characterized by deriving from the signals at least one of the following data:
- data relating to the time interval between the connection of a milk cluster and the beginning of the milk flow from the udder of an animal;
- data relating to the time interval between the beginning of the milk flow and the end of the milk flow;
- data relating to the maximum flow rate in a subinterval of the milk flow period;
- data relating to the amount of milk which has flowed on average during the milk flow period; and/or
- data relating to the variation in the milk flow in time during the milk flow period.

15. A method according to any one of the preceding claims 12, 13 or 14, characterized in that said signalled deviations and/or changes are processed in combination with other available parameters, such as feed intake, milk yield, temperature, animal activity, milk conductivity and water intake, for the purpose of watching the reproductive status and/or health status of the relevant animal or the relevant group of animals.

## Patentansprüche

1. Informationssystem zum automatischen Erhalten von Daten über Tiere in der Milchviehhaltung, mit einer Verarbeltungsvorrichtung (23) mit einem Eingabegatter (25), an welche Signale geliefert werden können, die Informationen über den Milchfluß während des Melkens eines Tieres oder einer Gruppe von Tieren enthalten, und bei dem die Verarbeitungsvorrichtung (23) zum Ableiten von Daten aus den Signalen, zum Speichern und zum Weiterverarbeiten der Daten ausgebildet ist, wobei die Verarbeitungsvorrichtung (23) ferner ausgebildet ist, Abweichungen In den Daten bezüglich vorbestimmter Milchflußcharakteristika des betreffenden Tieres oder der betreffenden Gruppe von Tieren zu bestimmen und/oder vorbestimmte Flußcharakteristika auf der Basis neuerer abgeleiteter Daten zu aktualisieren und Veränderungen in den Milchflußcharakteristika festzustellen, und ein Tier oder einer Gruppe von Tieren anzuzeigen, bei denen die Abweichungen und/oder Veränderungen vorbestimmte Werte überschreiten, und zwar zum Zweck der Überwachung des Reproduktionsstatus und/oder des Gesundheitszustands des betreffenden Tieres oder der betreffenden Gruppe von Tieren, dadurch gekennzeichnet, daß die Verarbeitungsvorrichtung (23) ebenfalls In der Lage ist, aus den Signalen einen erwarteten Wert der Daten und eine maximale zulässige Abweichung von dem erwarteten Wert mittels statistischer Verfahren zu bestimmen, um die vorbestimmten Milchflußcharakteristika zu erhalten.

2. Informationssystem nach Anspruch 1, dadurch gekennzeichnet, daß die Verarbeitungsvorrichtung (23) eine Signalvorrichtung (30) aufweist oder mit dieser gekoppelt ist, die In der Lage ist, Abweichungen zwischen den Milchflußcharakteristika einerseits und den aus den empfangenen Signalen abgeleiteten Daten andererseits anzuzeigen, die größer als vorbestimmte zulässige Abweichungen sind, und/oder Veränderungen der Milchflußcharakteristika anzuzeigen, die größer als vorbestimmte zulässige Veränderungen sind.

3. Informationssystem nach Anspruch 2, dadurch gekennzeichnet, daß die Signalvorrichtung (30) ein Ausgangssignal erzeugt, wenn eine Abweichung größer als die zulässige Abweichung ist, und/oder eine Veränderung größer als die zulässige Veränderung ist.

4. Informationssystem nach einem der vorhergehenden Ansprüche, dadurch gekennzeichnet, daß die von den Signalen abgeleiteten Daten den Zeltraum zwischen dem Anschließen eines Melkgerätes (26) und dem Beginn des Milchflusses aus dem Euter eines Tieres betreffen.

5. Informationssystem nach einem der vorhergehenden Ansprüche, dadurch gekennzeichnet, daß die aus den Signalen abgeleiteten Daten den Zeltraum zwischen dem Beginn und dem Ende des Milchflusses bereffen.

6. Informationssystem nach einem der vorhergehenden Ansprüche, dadurch gekennzeichnet, daß die aus den Signalen abgeleiteten Daten die maximale Flußrate in einem Zeitintervall des Milchflußzeitraums betreffen.

7. Informationssystem nach einem der vorhergehenden Ansprüche, dadurch gekennzeichnet, daß die aus den Signalen abgeleiteten Daten die Milchmenge betreffen, die Im Durchschnitt während des Milchflußzeltraums geflossen Ist.

8. Informationssystem nach einem der vorhergehenden Ansprüche, dadurch gekennzeichnet, daß die aus den Signalen abgeleiteten Daten die zeitbezogenen Veränderungen des Milchflusses während des Milchflußzeitraums betreffen.

9. Informationssystem nach einem der vorhergehenden Ansprüche, dadurch gekennzeichnet, daß die Verarbeitungsvorrichtung ein oder mehrere Eingabegatter (23) aufweist, in welche andere Parameter betreffend jedes einzelne Tier oder jede Gruppe von Tieren eingegeben werden können.

10. Informationssystem nach Anspruch 9, dadurch gekennzeichnet, daß die Verarbeitungsvorrichtung die angegebenen Abweichungen und/oder Veränderungen in Kombination mit anderen verfügbaren Parametern, beispielsweise Futteraufnahme, Milchertrag, Temperatur, Tieraktivität, Milchleltfähigkeit und Wasseraufnahme, verarbeitet.

11. Informationssystem nach einem der vorhergehenden Ansprüche, dadurch gekennzeichnet, daß das System ferner einen Melkroboter zum automatischen Melken der Tiere aufweist, wobei der Melkroboter eine Einrichtung zum Erzeugen der Signale aufweist, die Informationen über den Milchfluß während des Melkens eines Tieres oder einer Gruppe von Tieren beinhalten.

12. Verfahren zum automatischen Erhalten von Daten über Tiere in der Milchviehhaltung, bei dem Signale, die Informationen über den Milchfluß während des Melkens eines Tieres oder einer Gruppe von Tieren enthalten, einer Verarbeitungsvorrichtung zugeführt werden, und bei dem die Verarbeitungsvorrichtung Daten aus den Signalen ableitet, die Daten speichert und weiterverarbeitet, wobei Abweichungen in den Daten bezüglich vorbestimmter Milchflußcharakteristika des betreffenden Tieres oder der betreffenden Gruppe von Tieren bestimmt und/oder vorbestimmte Flußcharakteristika auf der Basis neuerer abgeleiteter Daten aktualisiert und Veränderungen In den Milchflußcharakteristika festgestellt werden, und ein Tier oder eine Gruppe von Tieren zum Zweck des Überwachens des Reproduktionsstatus und/oder des Gesundheitszustands des betreffenden Tieres oder der betreffenden Gruppe von Tieren angezeigt wird, wenn die Abweichungen und/oder Veränderungen vorbestimmte Werte überschreiten, dadurch gekennzeichnet, daß aus den Signalen ein erwarteter Wert der Daten und eine maximale zulässige Abweichung von dem erwarteten Wert mittels statistischer Verfahren bestimmt wird, um die vorbestimmten Milchflußcharakteristika zu erhalten.

13. Verfahren nach Anspruch 12, gekennzeichnet durch das Anzeigen von Abweichungen zwischen den Milchflußcharakteristika und den empfangenen Daten, die größer als vorbestimmte zulässige Abweichungen sind, und/oder das Anzeigen von Veränderungen der Milchflußcharakteristika, die größer als vorbestimmte zulässige Veränderungen sind.

14. Verfahren nach Anspruch 12 oder 13, gekennzeichnet durch das Ableiten wenigstens eines der folgenden Datenwerte aus den Signalen:
- Daten betreffend den Zeitraum zwischen dem Anschließen eines Melkgerätes und dem Beginn des Milchflusses aus dem Euter eines Tieres;
- Daten betreffend den Zeitraum zwischen dem Beginn und dem Ende des Milchflusses;
- Daten betreffend die maximale Flußrate in einem Zeitintervall des Milchflußzeitraums;
- Daten betreffend die Milchmenge, die Im Durchschnitt während des Milchflußzeitraums geflossen ist; und/oder
- Daten betreffend die zeltbezogenen Veränderungen des Milchflusses während des Milchflußzeitraums.

15. Verfahren nach einem der Ansprüche 12, 13, oder 14, dadurch gekennzeichnet, daß die angezeigten Abweichungen und/oder Veränderungen in Kombination mit anderen verfügbaren Parametern, beispielsweise Futteraufnahme, Milchertrag, Temperatur, Tieraktivität, Milchleitfähigkeit und Wasseraufnahme, zum Zweck der Überwachung des Reproduktionsstatus und/oder des Gesundheitszustands des betreffenden Tieres oder der betreffenden Gruppe von Tieren verarbeitet werden.

## Revendications

1. Système d'information pour obtenir automatiquement des données sur des animaux laitiers, qui comporte un dispositif de traitement (23) avec une porte d'entrée (25) à laquelle peuvent être appliqués des signaux qui contiennent des informations sur un écoulement de lait pendant la traite d'un animal ou d'un groupe d'animaux, et dans lequel le dispositif de traitement (23) est apte à calculer des données à partir desdits signaux, stocker lesdites données et traiter ultérieurement lesdites données, le dispositif de traitement (23) étant de plus apte à déterminer des écarts dans les données par rapport à des caractéristiques prédéterminées d'écoulement de lait de l'animal pertinent ou du groupe d'animaux pertinent et/ou à mettre à jour les caractéristiques prédéterminées d'écoulement en fonction de données calculées plus récemment et à déterminer des changements dans lesdites caractéristiques d'écoulement de lait, et à signaler un animal ou un groupe d'animaux dans lequel les écarts et/ou les changements dépassent des valeurs prédéterminées, dans le but d'observer l'état de reproduction et/ou l'état de santé de l'animal pertinent ou du groupe d'animaux pertinent, caractérisé en ce que le dispositif de traitement (23) est également apte à déterminer à partir desdits signaux une valeur escomptée desdites données et un écart admissible maximal par rapport à ladite valeur escomptée au moyen de techniques statistiques pour obtenir lesdites caractéristiques prédéterminées d'écoulement de lait.

2. Système d'information selon la revendication 1, caractérisé en ce que le dispositif de traitement (23) comporte, ou est couplé à, un dispositif de signalisation (30) qui est apte à signaler des écarts entre, d'une part, les caractéristiques d'écoulement de lait et, d'autre part, les données calculées à partir des signaux reçus qui sont supérieurs à des écarts admissibles prédéterminés et/ou est apte à signaler des changements dans lesdites caractéristiques d'écoulement de lait qui sont supérieurs à des changements admissibles prédéterminés.

3. Système d'information selon la revendication 2, caractérisé en ce que le dispositif de signalisation (30) génère un signal de sortie lorsqu'un écart est supérieur à l'écart admissible et/ou qu'un changement est supérieur au changement admissible.

4. Système d'information selon l'une quelconque des revendications précédentes, caractérisé en ce que les données calculées à partir des signaux se rapportent à l'intervalle de temps entre le branchement d'un faisceau-trayeur (26) et le début de l'écoulement de lait du pis d'un animal.

5. Système d'information selon l'une quelconque des revendications précédentes, caractérisé en ce que les données calculées à partir des signaux se rapportent à l'intervalle de temps entre le début de l'écoulement du lait et la fin de l'écoulement du lait.

6. Système d'information selon l'une quelconque des revendications précédentes, caractérisé en ce que les données calculées à partir des signaux se rapportent au débit maximal dans un sous-intervalle de la période d'écoulement de lait.

7. Système d'information selon l'une quelconque des revendications précédentes, caractérisé en ce que les données calculées à partir des signaux se rapportent à la quantité de lait qui s'est écoulée en moyenne pendant la période d'écoulement de lait.

8. Système d'information selon l'une quelconque des revendications précédentes, caractérisé en ce que les données calculées à partir des signaux se rapportent à la variation de l'écoulement de lait en fonction du temps pendant la période d'écoulement de lait.

9. Système d'information selon l'une quelconque des revendications précédentes, caractérisé en ce que le dispositif de traitement comporte une ou plusieurs portes d'entrée (25) auxquelles peuvent être appliqués d'autres paramètres concernant chaque animal individuel ou chaque groupe d'animaux.

10. Système d'information selon la revendication 9, caractérisé en ce que le dispositif de traitement traite lesdits écarts et/ou changements signalés en combinaison avec d'autres paramètres disponibles, tels que consommation d'aliments, production de lait, température, activité de l'animal, conductivité du lait et absorption d'eau.

11. Système d'information selon l'une quelconque des revendications précédentes, caractérisé en ce que le système comporte de plus un robot de traite pour traire automatiquement les animaux, le robot de traite comportant des moyens pour générer lesdits signaux contenant des informations sur l'écoulement du lait pendant la traite d'un animal ou d'un groupe d'animaux.

12. Procédé pour obtenir automatiquement des données sur des animaux laitiers, dans lequel des signaux contenant des informations sur un écoulement de lait pendant la traite d'un animal ou d'un groupe d'animaux sont appliqués à un dispositif de traitement et le dispositif de traitement calcule des données à partir des signaux, stocke les données et traite ultérieurement les données, des écarts étant déterminés dans les données par rapport à des caractéristiques prédéterminées d'écoulement de lait de l'animal pertinent ou du groupe d'animaux pertinent pour mettre à jour les caractéristiques prédéterminées d'écoulement en fonction de données calculées plus récemment et/ou pour déterminer des changements dans lesdites caractéristiques d'écoulement de lait, et un animal ou un groupe d'animaux étant signalé dans le but d'observer l'état de reproduction et/ou l'état de santé de l'animal pertinent ou du groupe d'animaux pertinent, lorsque les écarts et/ou changements dépassent des valeurs prédéterminées, caractérisé en ce qu'une valeur escomptée desdites données et un écart maximal possible est déterminé à partir desdits signaux au moyen de techniques statistiques pour obtenir lesdites caractéristiques prédéterminés d'écoulement de lait.

13. Procédé selon la revendication précédente 12, caractérisé par le signalement des écarts entre les caractéristiques d'écoulement de lait et les données reçues qui sont supérieurs à des écarts admissibles prédéterminés et/ou des changements dans lesdites caractéristiques d'écoulement de lait qui sont supérieurs à des changements admissibles prédéterminés.

14. Procédé selon l'une des revendications précédentes 12 ou 13, caractérisé par le calcul à partir des signaux d'au moins une des données suivantes :
- données relatives à l'intervalle de temps entre le branchement d'un faisceau-trayeur et le début de l'écoulement de lait du pis d'un animal;
- données relatives à l'intervalle de temps entre le début de l'écoulement du lait et la fin de l'écoulement du lait;
- données relatives au débit maximal dans un sous-intervalle de la période d'écoulement de lait;
- données relatives à la quantité de lait qui s'est écoulée en moyenne pendant la période d'écoulement de lait; et/ou
- données relatives à la variation de l'écoulement de lait en fonction du temps pendant la période d'écoulement de lait.

15. Procédé selon l'une des revendications précédentes 12 ou 13 ou 14, caractérisé en ce que lesdits écarts et/ou changements signalés sont traités en combinaison avec d'autres paramètres disponibles, tels que consommation d'aliments, production de lait, activité de l'animal, conductivité du lait et absorption d'eau, dans le but d'observer l'état de reproduction et/ou l'état de santé de l'animal pertinent ou du groupe d'animaux pertinent.
